# EUROPEAN PATENT SPECIFICATION

(11) **EP 3 193 411 B1**
(45) Date of publication and mention of the grant of the patent: **06.03.2019**
(21) Application number: 16151712.3
(22) Date of filing: 18.01.2016
(51) Int. Cl.: H01R 43/28, H02G 1/12

(54) **APPARATUS AND METHOD FOR SPLAYING AT LEAST ONE CABLE LAYER OF A SHIELDED CABLE**
VORRICHTUNG UND VERFAHREN ZUM AUFWEITEN MINDESTENS EINER KABELSCHICHT EINES ABGESCHIRMTEN KABELS
APPAREIL ET PROCÉDÉ D'ÉVASEMENT D'AU MOINS UNE COUCHE DE CÂBLE D'UN CÂBLE BLINDÉ

(43) Date of publication of application: 19.07.2017
(73) Proprietor: Unitechnologies SA, 3238 Gals (CH)
(72) Inventor: Knuchel, Claude-Alain, 2735 Malleray (CH); Bubendorf, Denis Paul, 2022 Bevaix (CH)
(74) Representative: AMMANN PATENTANWÄLTE AG BERN

(56) References cited:
- DE-A1- 4 027 904
- JP-A- 2012 050 169
- US-A- 3 721 138
- US-A1- 2005 076 500
- US-A1- 2007 173 122

## Description

The invention relates to an apparatus for splaying at least one cable layer of a shielded cable away from a core section of the cable. The apparatus comprises a splaying body enclosing a tubular cavity having an aperture at a front end of the splaying body in which the cable core section is insertable at a free end of the cable in an axial cable direction. The invention also relates to a corresponding splaying method.

Such an apparatus is used, for instance, to prepare a coaxial cable for the connection of a plug-in connector to a cable terminal. For this purpose, the cable terminal needs to be processed first by stripping a part of the cable layer comprising at least an outer conductor from the core section comprising at least an inner conductor at the free cable end. Then a contact is usually crimped on the inner conductor at the free cable end. Subsequently, the cable terminal needs to be prepared in such a way that a clearance is provided in between the cable layer and the core section. The clearance is usually provided by splaying the cable layer away from the cable core section at the cable terminal. Thus, the connector can be inserted into the clearance and attached afterwards, for instance by crimping respective contacts of the connector to the coaxial cable.

The required splaying procedure is quite elaborate und normally involves personal interaction, at least in the cases when a good quality of the separation in between the cable core section and the cable layer shall be met in a reproducible manner and/or when more complex cable structures of a shielded cable shall be processed. For instance, an automatized splaying process of a coaxial cable comprising an inner conductor surrounded by an insulator, the insulator surrounded by a metallic foil, and the metallic foil surrounded by a wire netting can be delicate. For instance, when the cable layer shall be separated from the core section at a junction between the insulator and the metallic foil or at a junction between the metallic foil and the wire netting problems can arise due to a particular thinness and/or sensitivity of the metallic foil. The necessity of human interaction in such a process, however, is quite tedious and also constitutes a cost factor.

International patent publication no. WO 96/17416 discloses such a splaying apparatus that can be used by a person as a hand tool, and a corresponding splaying method comprising two separate working steps. In the first step, the cable is manually moved in an arcuate path after the core section is inserted into a first hole of the splaying tool, without rotating the cable about its axis, thereby causing the cable to deflect individual strands of the wire netting outwardly in a conical shape. In a second step, the core section is inserted in a second hole and axially moved further along such that the wire netting cams radially outwardly on a flat surface surrounding the second hole. The requirement of two separate working steps, however, introduces an additional complexity to the process in addition to the need of personal interaction.

US 3 721 138 A discloses an apparatus and a method for splaying at least one cable layer of a shielded cable according to the preambles of claims 1 and 14, respectively. It is an object of the present invention to remedy at least one of the above mentioned disadvantages and to provide the initially addressed splaying apparatus and/or method with the possibility to be applied in an automatized way, in particular without the need of personal involvement. It is another object to meet high quality standards, in particular with respect to the accuracy and reproducibility of the splaying result. It is a further object to also permit the splaying of rather complex cable structures.

At least one of these objects is achieved with a device comprising the features of patent claim 1 and/or with a method comprising the features of patent claim 14. Advantageous embodiments of the invention are defined by the dependent claims.

Accordingly, an apparatus according to the invention comprises a splaying body enclosing a tubular cavity having an aperture at a front end of the splaying body in which the cable core section is insertable at a free end of the cable in an axial cable direction. The apparatus further comprises a cable fixture configured to position the cable with the free cable end facing the front end of the splaying body. The apparatus further comprises a linear actuator configured to advance the splaying body in the direction of a central axis of the tubular cavity such that the free cable end can be inserted into the tubular cavity, wherein a junction between the cable core section and the cable layer is substantially adjoining said body front end. The apparatus further comprises a rotary actuator configured to rotate the splaying body around the central cavity axis. The apparatus further comprises a pressure supply configured to provide a pressure stream at the body front end such that a pressurized region is producible substantially on the junction adjoining the body front end. The splaying body comprises an annular surface portion at said body front end adapted to be advancable along the axial cable direction within said pressurized junction region.

Such an apparatus can allow an automation of the splaying process in a reliable manner. In particular, it has been found that an application of pressure at the junction region in between the cable core section and the cable layer combined with a rotation of the splaying body can account for a precise and sensitive separation of the cable layer from the cable core section during which a personal involvement of a human operator is dispensable. Moreover, due to its rather sensitive operation, the apparatus can be applied for the splaying of rather complex and/or easily damageable cable structures.

An according method comprises an insertion step of inserting the cable core section at a free end of the cable into a tubular cavity of a splaying body. The method further comprises an advancement step of advancing the cable core section inside the tubular cavity along a central axis of the tubular cavity. During the advancement step, a junction between the cable core section and the cable layer is substantially adjoining a front end of the splaying body. During the advancement step, the splaying body is rotated around the central cavity axis. During the advancement step, a pressure stream is provided at the body front end such that a pressurized region is produced substantially on the junction adjoining said body front end. During the advancement step, an annular surface portion of the splaying body is advanced along the axial cable direction within the pressurized junction region.

The method is preferably carried out in the apparatus according to the invention. The apparatus is preferably operable to execute the method according to the invention. It is understood that the subsequently described preferred configurations of an apparatus according to the invention can be correspondingly applied in a method according to the invention, and vice versa.

The annular surface portion is preferably adapted to be advancable along the axial cable direction in between the cable core section and the cable layer. To this end, the annular surface portion preferably comprises a taper portion tapering toward the body front end. In this way, a wedging force can be preferably applied on said junction adjoining the body front end. The taper portion preferably extends around the complete circumference of the annular surface portion, in particular substantially equidistantly spaced from the central cavity axis. Preferably, the taper portion ends substantially at the body front end. Preferably, the annular surface portion is provided on an outer wall of the splaying body.

Preferably, a substantially circular front edge is provided at the body front end, the circular front edge bordering the aperture of the tubular cavity. Preferably, the circular front edge forms a cutting edge adapted to substantially cut through the junction in the cable adjoining the body front end. Preferably, the circular front edge has a substantially homogenous thickness around the aperture at the body front end, in particular a thickness varying around the aperture at the body front end by less than 10 µm. According to a preferred configuration, the circular front edge preferably has an average thickness around the aperture at the body front end of at least 1 µm, more preferred at least 10 µm. According to a preferred configuration, the circular front edge preferably has an average thickness around the aperture at the body front end of at most 100 µm.

Preferably, the taper portion leads into the circular front edge. According to a preferred configuration, the taper portion comprises a substantially pointed shape at the circular front edge. According to another preferred configuration, the taper portion comprises a rounded shape at the circular front edge. In this way, the circular front edge can be configured to meet a desired precision and/or sensitivity of the splaying process. In particular, it has been realized that an exaggerated sharpness of the circular front edge can provoke damages on the cable during the splaying process.

According to a preferred configuration, the taper portion preferably comprises a slope of inclination between 2 degrees and 30 degrees, more preferred between 5 degrees and 20 degrees and most preferred between 8 degrees and 12 degrees, relative to the central cavity axis. Thus, a resulting wedging force on the cable junction adjoining the body front end can be optimized with respect to various requirements of the splaying process, in particular specific material parameters of the cable.

According to a preferred configuration, the taper portion comprises a substantially constant slope of inclination relative to the central cavity axis. According to another preferred configuration, the taper portion comprises a slope of inclination relative to the central cavity axis that is decreasing toward the body front end, in particular continuously decreasing toward the body front end. According to a preferred configuration, the taper portion preferably extends over at least 0.3 mm, more preferred at least 2 mm and most preferred at least 10 mm, along the central cavity axis.

The aperture preferably has a diameter substantially corresponding to a diameter of the cable core section, in particular a diameter preferably deviating by less than 100 µm, more preferred by less than 10 µm, from the diameter of the cable core section. The tubular cavity preferably comprises an entry sector leading into the body front end along the central cavity axis, the entry sector having a substantially constant diameter substantially corresponding to the diameter of the aperture at the body front end. Thus, an inner wall of the splaying body at the entry sector preferably substantially borders on a circumference of the cable core section. This can advantageously contribute to a correct alignment of the cable during the splaying process. According to a preferred configuration, the entry sector preferably extends over at least 0.3 mm, more preferred at least 2 mm and most preferred at least 10 mm, along the central cavity axis.

The tubular cavity preferably comprises a distal sector following the entry sector at an end of the entry sector opposed to the body front end, the distal sector having a diameter exceeding the diameter of the entry sector. In this way, a clearance in between an inner wall of the splaying body at the distal sector and the cable core section is preferably provided as the splaying body is advanced onward the axial cable direction. The clearance can facilitate the axial movement of the splaying body.

The splaying body preferably comprises or consists of a substantially cylindrical body. Preferably, the cylindrical body has a central axis substantially corresponding to the central cavity axis. The tubular cavity preferably extends substantially through a total length of the splaying body along the central cavity axis.

Preferably, the splaying body is configured to be mounted onto the rotary actuator such that it is rotatable around the central cavity axis. After mounting, the rotary actuator is preferably arranged opposed to the body front end. The rotary actuator is preferably configured such that a rotational speed of the splaying body is adjustable. According to a preferred configuration, a rotational speed of the splaying body during the advancement of its annular surface portion along the axial cable direction preferably ranges in between 1 rpm and 100 rpm, more preferred in between 10 rpm and 50 rpm. Preferably, at least the annular surface portion at the body front end, more preferred substantially the complete splaying body, is formed by a metal and/or by a ceramic. The metal is preferably hardened tool steel and/or tungsten. The ceramic is preferably alumina oxide and/or zircon oxide.

The pressure supply is preferably configured to provide the pressure stream through the aperture of the tubular cavity. To this end, the pressure supply is preferably configured such that the pressure stream is led through the tubular cavity along the central cavity axis. During the advancement of the annular surface portion of the splaying body along the axial cable direction, the pressure stream preferably passes in between an inner wall of the splaying body and a part of the cable core section that is advanced inside the tubular cavity. The pressure supply is preferably configured such that a pressure of the pressure stream is adjustable. To this end, the pressure supply may comprise a pressure adjustment valve. According to a preferred configuration, a pressure value provided by the pressure supply inside the tubular cavity during the advancement of the annular surface portion along the axial cable direction preferably ranges in between 1 bar and 20 bar, more preferred in between 1 bar and 5 bar.

Preferably, the pressure supply comprises a pneumatic pressure source. Alternatively or additionally, a hydraulic pressure source is conceivable. The pneumatic pressure source is preferably compressed air. Thus, the pressure stream is preferably provided by an air jet being applied substantially on said junction of the cable which is adjoining the body front end.

The cable fixture preferably comprises a proximal cable mounting configured to fix a proximal cable portion in a position in which the proximal cable portion is substantially concentric with said central cavity axis. The proximal cable mounting is preferably configured to fix the proximal cable portion in a closed state and to release the proximal cable portion in an opened state.

The proximal cable mounting preferably comprises at least two gripping jaws configured to fix the proximal cable portion in between. In the opened state, the gripping jaws are preferably moved further apart in order to release the cable. The gripping jaws preferably comprise a gripping length along the axial cable direction, the gripping length corresponding to the length of the proximal cable portion that is fixed in between the gripping jaws in the closed state. According to a preferred configuration, the gripping length is preferably at most 50 mm, more preferred at most 30 mm. In this way, a reliable positioning of the free cable end concentric with the central cavity axis can be achieved and a misalignment of the free cable end due to imperfections of the cable course within the gripping jaws can be effectively avoided.

Preferably, the cable fixture comprises a distal cable mounting disposed at a larger distance from the body front end than the proximal cable mounting. The distal cable mounting is preferably configured to fix a distal cable portion in a position in which the distal cable portion is substantially concentric with the central cavity axis. The distal cable mounting is preferably configured to fix the distal cable portion in a closed state and to release the distal cable portion in an opened state. The proximal cable mounting and distal cable mounting are preferably spaced from one another in the axial cable direction. According to a preferred configuration, the spacing of the respective mounting parts which are acting on the cable in the axial cable direction is preferably at most 100 mm, more preferred at most 20 mm.

The distal cable mounting preferably comprises at least two gripping jaws configured to fix the distal cable portion in between. In the opened state, the gripping jaws are preferably moved further apart in order to release the cable. The gripping jaws preferably comprise a gripping length along the axial cable direction, the gripping length corresponding to the length of the distal cable portion that is fixed in between the gripping jaws in the closed state. The gripping length of the distal cable mounting is preferably larger than the gripping length of the proximal cable mounting. According to a preferred configuration, the gripping length of the distal cable mounting is preferably at least 20 mm and/or at most 100mm. In this way, a secure fastening of the cable can be achieved, even when the proximal cable mounting is in the opened state. Alternatively or additionally, at least an additional distal mounting is disposed along the axial cable direction disposed at a larger distance from the body front end than the other distal cable mounting. In this case, a shorter gripping length of the distal mountings can be sufficient for a desired cable fastening.

A cable end portion leading to the free cable end preferably comprises or consists of a cable part on which the cable core section is laid open, in particular stripped. Thus, the cable layer may be removed on this cable part, in particular during a preceding processing step. Preferably, the junction between the cable core section and the cable layer adjoining the body front end is initially provided as an open laid junction. The open laid junction is preferably provided at a transition region between the cable end portion on which the cable core section is laid open and a remaining cable portion on which the cable core section is not laid open, in particular surrounded by the cable layer to be splayed away from the core section.

During the insertion step, the cable end portion with the open laid cable core section is preferably inserted into the tubular cavity. During the advancement step, the cable core section of the remaining cable portion is preferably advanced inside the tubular cavity. During the advancement step the cable layer splayed away from the core section at the remaining cable portion is preferably advanced along the annular surface portion outside the tubular cavity.

Before the insertion step of inserting the cable core section into the tubular cavity, the cable is preferably mounted on the cable fixture. In particular, a proximal cable portion is disposed in the proximal cable mounting and a distal cable portion is disposed in the distal cable mounting. According to a preferred implementation, after mounting, the proximal cable mounting is preferably spaced by less than 50 mm, more preferred by less than 20 mm, from the free cable end. According to a preferred implementation, after mounting, the distal cable mounting is preferably spaced by more than 100 mm, more preferred by more than 50 mm, from the free cable end. At least part of the cable end portion on which the cable core section is laid open, in particular stripped, preferably protrudes from the proximal cable mounting in the axial cable direction toward the body front end. The proximal cable portion disposed in the proximal cable mounting may also comprise or consist of a part of the cable end portion on which the cable core section is laid open. The distal cable portion disposed in the distal cable mounting preferably consists of a cable part on which said cable layer is provided on the cable core section, in particular of a cable part that is not stripped.

During the insertion step, the cable is preferably hold in a fixed position at the distal cable portion and hold in a fixed position at the proximal cable portion. To this end, the proximal cable mounting and the distal cable mounting are preferably in their respective closed state. During the insertion step, the splaying body is preferably advanced along the central body axis toward the free cable end until the free cable end, in particular at least part of the cable end portion on which the cable core section is laid open, is inserted into the tubular cavity. Preferably, the splaying body is not rotated during the insertion step. Preferably, substantially no pressure stream is provided at the body front end during the insertion step.

The apparatus preferably comprises a process controller. During the insertion step, the process controller is preferably operative to control the linear actuator to advance the splaying body along the central cavity axis from an initial position in which the free cable end is arranged outside the tubular cavity to an intermediate position in which the free cable end is inserted into the tubular cavity.

After the insertion step and before the advancement step, the proximal cable mounting is preferably released from its fixed position. To this end, the proximal cable mounting is preferably switched to its opened state. The process controller is preferably operative, after the splaying body is advanced from the initial position to the intermediate position, to switch the proximal cable mounting from the closed state to the opened state. The distal cable mounting is preferably kept in its closed state.

In this way, a certain translational degree of freedom transverse to the axial cable direction is preferably provided at the proximal cable portion and/or and in a cable portion between the proximal cable portion and the distal cable portion, in particular within the movement limits stemming from a fixation of the free cable end by the inner walls of the splaying body surrounding the tubular cavity and/or from the fixation of the distal cable portion in the distal cable mounting. The cable is thus preferably at least slightly bendable, in particular circularly and/or elliptically displaceable in the course of a bending movement, at least at the proximal cable portion and/or and in a cable portion between the proximal cable portion and the distal cable portion. Such a motional freedom can advantageously contribute to an avoidance of cable damages during the splaying procedure, which for instance may result from a slight misalignment of the splaying body with respect to the fixed cable or more generally from any forces transmitted from the splaying body to the cable.

During the advancement step, the cable is preferably hold in a fixed position at the distal cable portion and hold in a released position at the proximal cable portion. During the advancement step, the free cable end is preferably moved further inside the tubular cavity. During the advancement step, the free cable end is preferably moved further inside the tubular cavity. During the advancement step, the circular front edge at the body front end is preferably advanced through the junction adjoining the body front end, in particular during the rotation of the splaying body. The process controller is preferably operative, preferably after the proximal cable mounting is switched to the opened state, to control the linear actuator to further advance the splaying body along the central cavity axis from the intermediate position to an end position in which the free cable end is moved further inside said tubular cavity.

After the advancement step, the rotation of splaying body is preferably stopped. The pressure stream is preferably turned off. The splaying body is preferably moved back from the end position to the initial position.

According to a preferred configuration, the shielded cable is a coaxial cable comprising an inner conductor surrounded by an insulator surrounded by a metallic foil surrounded by a wire netting. According to a preferred implementation, the cable core section is provided by the inner conductor and the surrounding insulator. The cable layer then comprises the metallic foil surrounding the wire netting. According to another preferred implementation, the cable core section is provided by the inner conductor, the surrounding insulator, and the surrounding metallic foil. The cable layer then comprises the wire netting.

According to another preferred configuration, the shielded cable is a coaxial cable comprising an inner conductor surrounded by an insulator surrounded by a wire netting. According to a preferred implementation, the cable core section is provided by the inner conductor and the surrounding insulator. The cable layer then comprises the wire netting.

The method is preferably implemented in a fabrication chain comprising other terminal treatment steps for the cable. In particular, a stripping process for removing the cable layer on a cable end portion leading to the free cable end such that the cable core section is laid open may be applied before the splaying method. Moreover, a stripping process for laying open an inner conductor at the cable end portion and/or a crimping process for connecting a contact to the inner conductor may be applied before the splaying method. After the splaying method, a connecting process for connecting a terminal connector in between the cable core section and the splayed away cable layer may be applied.

Accordingly, the apparatus is preferably implemented in a fabrication chain comprising other terminal treatment devices for the cable. For instance, a skinning device for stripping a part of the cable layer from the core section at the free cable end and/or a crimping device for connecting a contact to the inner conductor of the cable core section at the free cable end may be disposed within the fabrication chain as preceding steps before the skinning process. For instance, a connector application device may be used to insert a connector into the clearance in between the cable core section and the cable layer provided by the skinning process and/or a connector fixation device for crimping the connector to the cable. In this way, the fabrication of a connection in between a cable terminal and a connector can advantageously be automatized.

The invention will be described in more detail in the following description of preferred exemplary embodiments with reference to the accompanying drawings. In the drawings:
- Fig. 1: is a top view of a shielded cable;
- Fig. 2: is a longitudinal sectional view of the cable shown in Fig. 1 along II;
- Fig. 3: is a perspective view of an apparatus for splaying at least one cable layer of a shielded cable;
- Fig. 4: is a perspective view of a splaying body;
- Fig. 5: is a longitudinal sectional view of the splaying body shown in Fig. 4; and
- Figs. 6a - 6j: are perspective views of a splaying assembly illustrating a method for splaying at least one cable layer of a shielded cable.

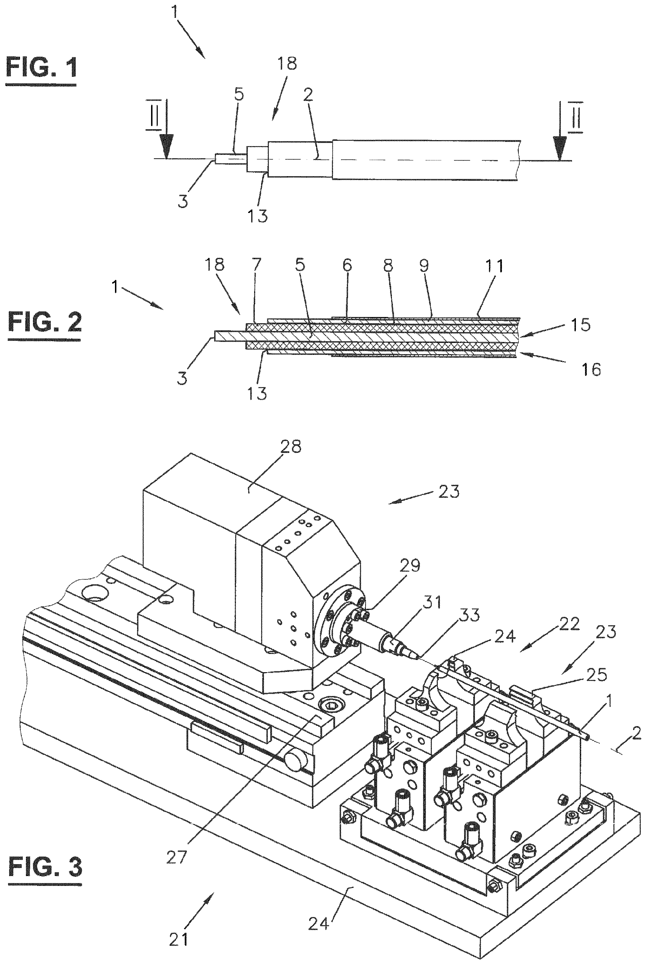

Figs. 1 and 2 depict a shielded cable 1 comprising a cable axis 2 extending in a longitudinal direction of cable 1, in particular through a center of cable 1. Cable 1 comprises a free cable end 3. Cable 1 is a coaxial cable comprising an inner conductor 5 and an outer conductor 6. Inner conductor 5 is a wire extending through the cable center in the direction of cable axis 2. Inner conductor 5 is surrounded by an insulator 7 which also extends in the axial cable direction. Insulator 7 is formed by a dielectric sheet. Dielectric sheet 7 is surrounded by outer conductor 6 such that it is arranged in between inner conductor 5 and outer conductor 6.

Outer conductor 6 is composed of a thin metallic foil 8 and a wire netting 9. Metallic foil 8 and wire netting 9 also extend along cable axis 2. Metallic foil 8 is disposed on top of dielectric sheet 7. Wire netting 9 is disposed on top of metallic foil 8 such that metallic foil 8 is arranged in between dielectric sheet 7 and wire netting 9. Outer conductor 6 is surrounded by a cover sheet 11 also extending in the axial cable direction.

Coaxial cable 1 has already been prepared for a terminal treatment, for instance for the connection of an end connector to the cable terminal. For this purpose, inner conductor 5 has been stripped from all surrounding sheets 7, 8, 9,11 on a last cable portion leading to free cable end 3 such that inner conductor 5 is laid open in the last cable portion. Dielectric sheet 7 has been stripped from all surrounding sheets 8, 9 ,11 on a second last cable portion leading to the last cable portion such that dielectric sheet 7 is laid open in the second last cable portion. Outer conductor 6 has been stripped from cover sheet 11 on a third last cable portion leading to the second last cable portion such that wire netting 9 is laid open in the third last cable portion. A junction 13 in between dielectric sheet 7 and metallic foil 8 is thus laid open at a transition region in between the second last cable portion and the third last cable portion.

As a next step of the terminal cable treatment, a splaying procedure shall be applied on cable 1 after which a clearance is provided in between a core section 15 and a cable layer 16 to be splayed away from core section 15. Core section 15 is constituted by inner conductor 5 and dielectric sheet 7. Cable layer 16 is constituted by remaining sheets 8, 9, 11, i.e. metallic foil 8, wire netting 9, and cover sheet 11. According to another configuration, core section 15 is constituted by inner conductor 5, dielectric sheet 7, and metallic foil 8. Cable layer 16 to be splayed away from core section 15 is then constituted by remaining sheets 9, 11, i.e. wire netting 9 and cover sheet 11. According to yet another configuration, cable 1 is provided without metallic foil 8. Core section 15 is then constituted by inner conductor 5 and dielectric sheet 7. Cable layer 16 to be splayed away from core section 15 is then constituted by remaining sheets 9, 11, i.e. wire netting 9 and cover sheet 11. It is understood that many other configurations are conceivable, in particular depending on a respective cable structure. In each configuration, cable 1 is preferably prepared in such a way that open laid junction 13 is provided in between core section 15 and cable layer 16. A cable end portion 18 is defined as a part of cable 1 leading to free cable end 3, in which part cable core section 15 is laid open.

Fig. 3 depicts a splaying apparatus 21. Apparatus 21 comprises a stationary part 22 and a movable part 23 mounted on a platform 24. Stationary part 22 comprises a cable fixture 23 in which cable 1 can be fixed along the direction of cable axis 2. Thus, the axial cable direction with respect to apparatus 21 is defined by the spatial arrangement of cable fixture 23 on apparatus 21. Cable fixture 23 comprises a proximal cable mounting 24 and a distal cable mounting 25 spaced apart from each other along cable axis 2. Proximal cable mounting 24 is arranged closer to free cable end 3 than distal cable mounting 24. Cable 1 is positioned in cable fixture 23 in such a way that cable end portion 18 protrudes from proximal cable mounting 24 in the axial cable direction opposed to the side of proximal cable mounting 24 which is neighboring distal cable mounting 24.

Stationary part 22 further comprises a pair of rails 27 substantially extending in the direction of cable axis 2. Movable part 23 is mounted on rails 27 such that it is displaceable toward cable fixture 23 and further away from cable fixture 23 substantially in the axial cable direction. Apparatus 21 comprises a linear actuator driving the displacement of movable part 23 on rails 27.

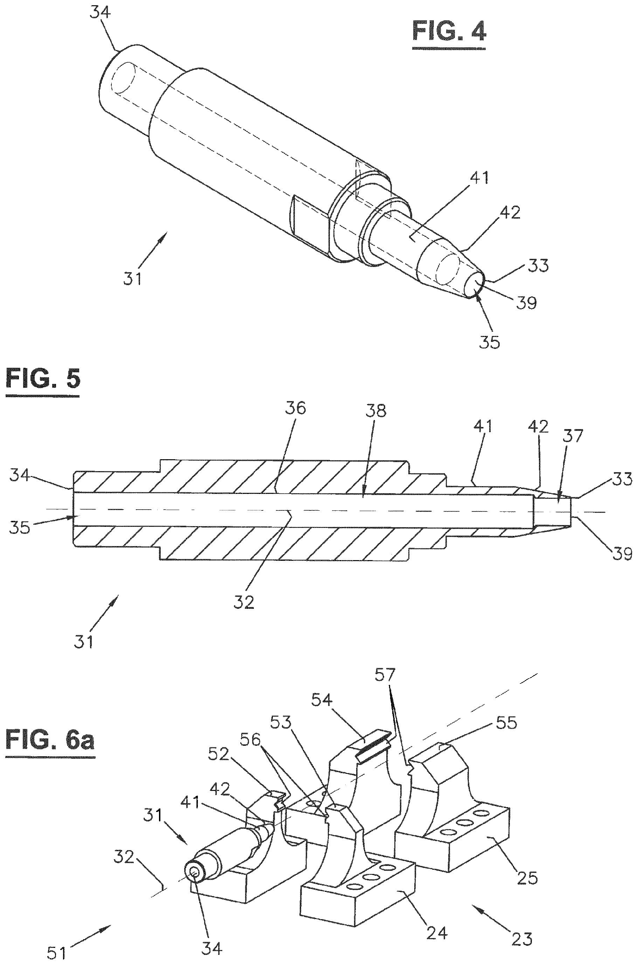

Movable part 23 comprises a splaying body 31 comprising a front end 33 facing free cable end 3 when cable 1 is fixed on cable fixture 23. Thus, front end 33 can be advanced toward cable end 3 by a displacement of movable part 23 on rails 27. As further illustrated in Fig. 5, splaying body 31 comprises a central cavity axis 32. Splaying body 31 is arranged such that central cavity axis 32 is substantially concentric with central cable axis 2.

Movable part 23 further comprises a rotary drive 28. Rotary drive 28 is arranged behind splaying body 31, as seen from the position of cable fixture 23. Rotary drive 28 comprises a chuck 29 in which splaying body 31 can be mounted, in particular at a rear end 34 of splaying body 31. Rotary drive 28 is thus configured to rotate splaying body 31 around central cavity axis 32.

Figs. 4 and 5 show splaying body 31 in a detailed view. Splaying body 31 is substantially cylindrical. Splaying body 31 comprises a tubular cavity 35 extending along central cavity axis 32 over a total length of splaying body 31 from front end 33 to rear end 34. Tubular cavity 35 is delimited by an inner wall 36 of cylindrical body 31. Tubular cavity 35 has a substantially circular cross section. Tubular cavity 35 comprises an entry sector 37 leading into body front end 33. The cross section of entry sector 37 substantially matches a cross section of cable end portion 18. Tubular cavity 35 comprises a distal sector 38 following entry sector 37 at an end of the entry sector 37 opposed to body front end 33. Distal sector 38 has a constant diameter slightly exceeding a constant diameter of entry sector 37.

Body front end 33 is provided as a circular front edge. Circular front edge 33 is surrounding an aperture 39 of tubular cavity 35. Splaying body 31 comprises an annular surface portion 42 on an outer wall 41 of splaying body 31. Annular surface portion 42 is leading to circular front edge 33. Annular surface portion 42 is provided as a taper portion tapering toward circular front edge 33. Taper portion 42 has a constant slope of inclination relative to central cavity axis 32.

Figs. 6a - 6j display an assembly 51 for splaying cable layer 16 of cable 1 away from core section 15 of cable 1. Assembly comprises constituent parts of apparatus 21 as shown in Figs. 3 - 5. Corresponding features are thus denoted by the same reference numerals.

As depicted in Fig. 6a, splaying assembly 51 comprises cable fixture 23 and splaying body 31. Cable fixture 23 is shown in greater detail than in Fig. 2. Proximal cable mounting 24 and distal cable mounting 25 are spaced apart in the direction of central cavity axis 32. Proximal cable mounting 24 comprises two proximal gripping jaws 52, 53 spaced apart in a direction transverse to central cavity axis 32. Proximal gripping jaws 52, 53 comprise a respective gripping surface 56 facing central cavity axis 32 extended out of tubular cavity 35. Proximal gripping jaws 52, 53 are configured to fix a proximal portion of cable 1 in between at the respective gripping surface 56 along a gripping length in the direction of central cavity axis 32.

Distal cable mounting 25 comprises two distal gripping jaws 54, 55 spaced apart in a direction transverse to central cavity axis 32. Distal gripping jaws 54, 55 comprise a respective gripping surface 57 facing central cavity axis 32 extended out of tubular cavity 35. Distal gripping jaws 54, 55 are configured to fix a distal portion of cable 1 in between at the respective gripping surface 57 along a gripping length in the direction of central cavity axis 32. Distal gripping jaws 54, 55 comprise a larger gripping length than proximal gripping jaws 52, 53.

In Fig. 6a, proximal cable mounting 24 and distal cable mounting 25 are shown in an opened state. In the respective opened state, proximal gripping jaws 52, 53 and distal gripping jaws 54, 55 are further spaced apart in a direction transverse to central cavity axis 32 as compared to a closed state of cable mounting 24 and distal cable mounting 25. Thus, cable 1 can be positioned in between proximal gripping jaws 52, 53 and distal gripping jaws 54, 55 in the respective opened state of proximal cable mounting 24 and distal cable mounting 25. In the respective closed state of proximal cable mounting 24 and distal cable mounting 25, cable 1 is hold in the respective fixed position at the proximal cable portion and distal cable portion in between proximal gripping jaws 52, 53 and distal gripping jaws 54, 55.

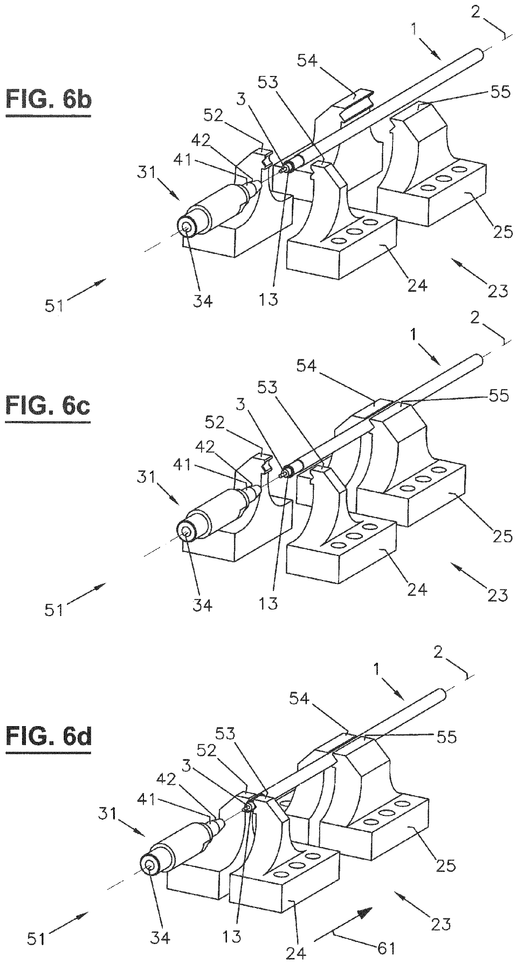

### Figs. 6b - 6j illustrate subsequent steps of a splaying method, as subsequently described:

In a first step illustrated in Fig. 6b, cable 1 is positioned in between proximal gripping jaws 52, 53 and distal gripping jaws 54, 55 such that at least a part of cable end portion 18 protrudes from gripping surface 56 of proximal gripping jaws 52, 53 in the axial cable direction. In a second step illustrated in Fig. 6c, distal gripping jaws 54, 55 are moved to the closed position of distal cable mounting 25 such that the distal cable portion is in its fixed position. At the same time or in a following step, proximal gripping jaws 52, 53 are moved to the closed position of proximal cable mounting 24 such that the proximal cable portion is also in its fixed position.

Before a third step, as illustrated in Fig. 6d, both the proximal cable mounting 24 and the distal cable mounting 25 are thus in the closed position. In the closed position of proximal cable mounting 24 and distal cable mounting 25, cable axis 2 is substantially concentric with central cavity axis 32 and free cable end 3 is substantially concentric with body front end 33, at least at the respective proximal cable portion and distal cable portion that is fixed. Cable end portion 18 projects from proximal gripping jaws 52, 53 in the axial cable direction toward front end 33 of splaying body 31.

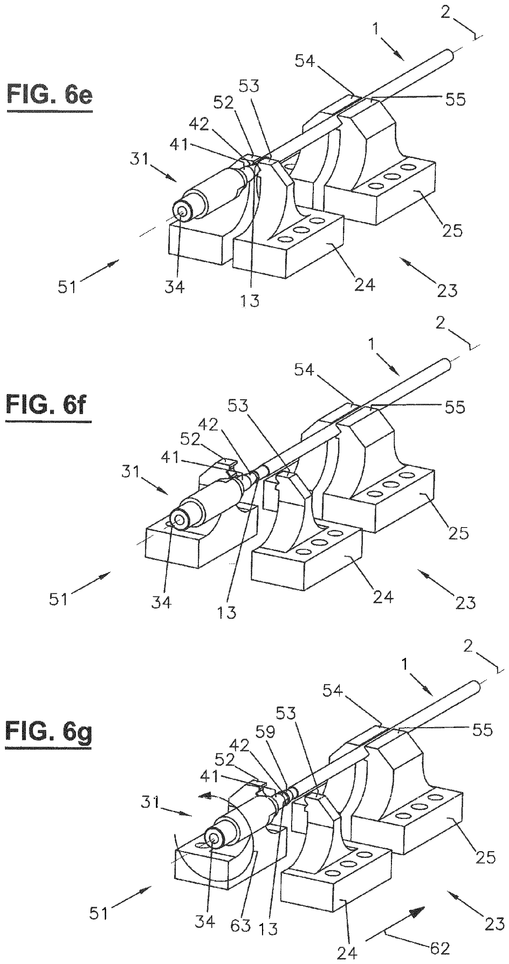

In the third step illustrated in Fig. 6d, splaying body 31 is advanced in a direction 61 along central cavity axis 32 toward free cable end 3 protruding from proximal gripping jaws 52, 53. As illustrated in Fig. 6e, splaying body 31 is moved in this direction until body front end 33 substantially reaches a front face of proximal gripping jaws 52, 53. During the course of this movement, free cable end 3 and at least a part of cable end portion 18 is inserted into tubular cavity 35 through aperture 39 at body front end 33. The step thus corresponds to an insertion step of inserting cable core section 15 into tubular cavity 35. More particularly, splaying body 31 is moved from an initial position in which free cable end 3 is arranged outside tubular cavity 35 to an intermediate position in which free cable end 3 is inserted into tubular cavity 35.

In a fourth step illustrated in Fig. 6f, the state of proximal cable mounting 24 is changed to its opened state in which proximal gripping jaws 52, 53 are moved further apart such that the proximal cable portion is released from its fixed position. In this way, cable 1 is bendable at the proximal cable portion and in between the proximal cable portion and distal cable portion being fixed in the distal cable mounting 25 which facilitates the subsequent splaying procedure. In particular, cable 1 is thus adapted for a self-adjustment in order to absorb splaying forces transmitted from splaying body 1 and/or to account for a slight misalignment of splaying body 1.

In a fifth step illustrated in Fig. 6g, the actual splaying process is initiated. For this purpose, a rotation of splaying body 31 in a direction 63 around central cavity axis 32 is set in motion. In addition, a pressure stream in the form of compressed air is passed through tubular cavity 35 from rear end 34 to front end 33 of splaying body 31 such that an air jet is generated at aperture 39. To this end, apparatus 21 shown in Fig. 3 comprises a pressure supply with a pneumatic pressure source providing the compressed air.

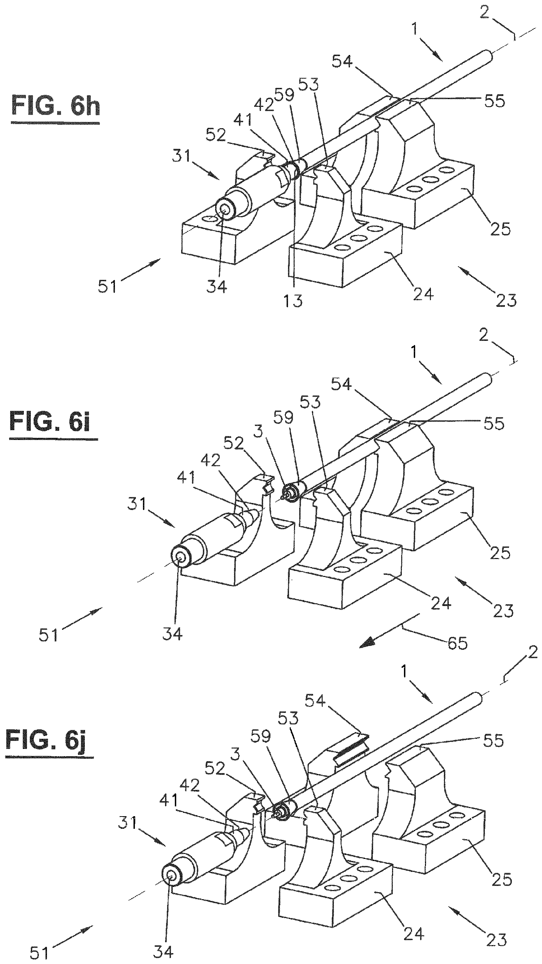

Subsequently, in an advancement step of advancing cable core section 15 inside tubular cavity 35, splaying body 31 is further advanced in a direction 62 along central cavity axis 32 toward distal cable mounting 25. Already at the beginning of this movement or during the course of this movement, open laid junction 13 of cable 1 adjoins body front end 33. The air jet generated at aperture 39 is thus acting on junction 13 such that a pressurized region is generated at junction 13. The combined rotation of splaying body 31 and pressurizing of junction 13 during the advancement of splaying body 31 has the effect that body front end 33 substantially cuts through junction 13 provoking a spatial separation of cable layer 16 from cable core section 15 along annular surface portion 42. As the advancement of splaying body 31 progresses, a separated cable layer 59 splayed away from cable core section 15 is thus continuously produced along cable axis 2. Splaying body 31 is advanced along central cavity axis 32 from the intermediate position to an end position, as illustrated in Fig. 6h.

In a sixth step illustrated in Fig. 6h, the advancement of splaying body 31 is stopped at the end position. The rotational movement of splaying body 31 is brought to a stop. The pressure stream through tubular cavity 35 is extinguished. In a seventh step illustrated in Fig. 6i, splaying body 31 is moved back in a direction 65 along central cavity axis 32 from the end position to the initial position. In an eighth step illustrated in Fig. 6j, distal cable mounting 25 is switched to its opened state such that cable 1 is released and can be removed. Now cable 1 is prepared for a further processing on splayed cable layer 59, such as an insertion of an end connector in between core section 15 and splayed cable layer 59.

The above described preferred embodiments are intended to illustrate the principles of the invention, but not to limit the scope of the invention. Various other embodiments and modifications to those preferred embodiments may be made by those skilled in the art without departing from the scope of the present invention that is solely defined by the claims.

## Claims

1. An apparatus for splaying at least one cable layer (16) of a shielded cable (1) away from a core section (15) of the cable, the apparatus comprising a splaying body (31) enclosing a tubular cavity (35) having an aperture (39) at a front end (33) of the splaying body (31) in which said cable core section (15) is insertable at a free end (3) of the cable (1) in an axial cable direction, **wherein** the apparatus comprises a cable fixture (23) configured to position the cable (1) with said free cable end (3) facing said body front end (33), a linear actuator configured to advance the splaying body (31) in the direction of a central axis (32) of the tubular cavity (35) such that said free cable end (3) is inserted into the tubular cavity (35) and a junction (13) between said cable core section (15) and said cable layer (16) is substantially adjoining said body front end (33), **and** a rotary actuator (28) configured to rotate the splaying body (31) around said central cavity axis (32), **characterized in that the apparatus further comprises** a pressure supply configured to provide a pressure stream at said body front end (33) such that a pressurized region is producible substantially on said junction (13) adjoining said body front end (33) **and that** the splaying body (31) comprises an annular surface portion (42) at said body front end (33) adapted to be advanceable along the axial cable direction within said pressurized junction region.

2. The apparatus according to claim 1, **characterized in that** the pressure supply is configured to provide said pressure stream through said aperture (39) at said body front end (33).

3. The apparatus according to claim 1 or 2, **characterized in that** the pressure supply comprises a pneumatic pressure source.

4. The apparatus according to one of claims 1 to 3, **characterized in that** it comprises a process controller operative to control the linear actuator to advance the splaying body (31) along said central cavity axis (32) from an initial position in which said free cable end (3) is arranged outside said tubular cavity (35) to an intermediate position in which said free cable end (3) is inserted into said tubular cavity (35).

5. The apparatus according to one of claims 1 to 4, **characterized in that** the cable fixture (23) comprises a proximal cable mounting (24) configured to fix a proximal cable portion in a position in which said proximal cable portion is substantially concentric with said central cavity axis (32).

6. The apparatus according to claims 4 and 5, **characterized in that** the process controller is operative after the splaying body (31) is advanced from said initial position to said intermediate position to switch the proximal cable mounting (24) from a closed state in which said proximal cable portion is fixed to an opened state in which said proximal cable portion is released.

7. The apparatus according to claim 6, **characterized in that** the process controller is operative after the proximal cable mounting (24) is switched to said opened state to control the linear actuator to further advance the splaying body (31) along said central cavity axis (32) from the intermediate position to an end position in which said free cable end (3) is moved further inside said tubular cavity (35).

8. The apparatus according to one of claims 5 to 7, **characterized in that** the proximal cable mounting (24) comprises at least two gripping jaws (52, 53) configured to fix said proximal cable portion in between.

9. The apparatus according to one of claims 5 to 8, **characterized in that** the cable fixture (23) comprises a distal cable mounting (25) disposed at a larger distance from said body front end (33) than the proximal cable mounting (24).

10. The apparatus according to one of claims 1 to 9, **characterized in that** said annular surface portion (42) comprises a taper portion tapering toward said body front end (33).

11. The apparatus according claim 10, **characterized in that** said taper portion comprises a slope of inclination between 2 degrees and 30 degrees, more preferred between 5 degrees and 20 degrees, relative to said central cavity axis (32).

12. The apparatus according to claim 10 or 11, **characterized in that** said taper portion comprises a substantially constant slope of inclination relative to said central cavity axis (32).

13. The apparatus according to one of claims 1 to 12, **characterized in that** said aperture (39) has a diameter substantially corresponding to a diameter of said cable core section (15).

14. A method for splaying at least one cable layer (16) of a shielded cable (1) away from a core section (15) of the cable, **wherein** the method comprises an insertion step of inserting said cable core section (15) at a free end (3) of the cable (1) into a tubular cavity (35) of a splaying body (31) and an advancement step of advancing the cable core section (15) inside said tubular cavity (35) along a central axis (32) of the tubular cavity, wherein during said advancement step a junction (13) between said cable core section (15) and said cable layer (16) is substantially adjoining a front end (33) of the splaying body (31) **and** the splaying body (31) is rotated around said central cavity axis (32),
**characterized in that**
a pressure stream is provided at said body front end (33) such that a pressurized region is produced substantially on said junction (13) adjoining said body front end (33), wherein an annular surface portion (42) of the splaying body (31) is advanced along the axial cable direction within said pressurized junction region.

15. The method according to claim 15, **characterized in that** the shielded cable (1) is a coaxial cable comprising an inner conductor (5) surrounded by an insulator (7) surrounded by a metallic foil (8) surrounded by a wire netting (9).

## Patentansprüche

1. Vorrichtung zum Abspreizen mindestens einer Kabelschicht (16) eines abgeschirmten Kabels (1) von einem Kernabschnitt (15) des Kabels, wobei die Vorrichtung einen Spreizkörper (31) aufweist, der einen rohrförmigen Hohlraum (35) umgibt, der an einem Vorderende (33) des Spreizkörpers (31) eine Öffnung (39) aufweist, in die der Kabelkernabschnitt (15) an einem freien Ende (3) des Kabels (1) in Axialrichtung des Kabels einführbar ist, wobei die Vorrichtung eine Kabelaufnahme (23) aufweist, die dazu ausgebildet ist, das Kabel (1) derart zu positionieren, dass das freie Kabelende (3) dem Vorderende (33) des Körpers gegenübersteht, einen Linearantrieb, der dazu ausgebildet ist, den Spreizkörper (31) in der Richtung einer Mittelachse (32) des rohrförmigen Hohlraums (35) vorzuschieben, so dass das freie Kabelende (3) in den rohrförmigen Hohlraum (35) eingeführt wird und eine Verbindungsstelle (13) zwischen dem Kabelkernabschnitt (15) und der Kabelschicht (16) im Wesentlichen am Vorderende (33) des Körpers anliegt, sowie einen Drehantrieb (28), der dazu ausgebildet ist, den Spreizkörper (31) um die Mittelachse (32) des Hohlraums zu drehen, **dadurch gekennzeichnet, dass** die Vorrichtung weiter eine Druckversorgung aufweist, die dazu ausgebildet ist, am Vorderende (33) des Körpers einen Druckstrom bereitzustellen, so dass ein druckbeaufschlagter Bereich im Wesentlichen an der am Vorderende (33) des Körpers anliegenden Verbindungsstelle (13) erzeugbar ist, und dass der Spreizkörper (31) am Vorderende des Körpers (33) einen ringförmigen Oberflächenbereich (42) aufweist, der innerhalb des druckbeaufschlagten Verbindungsbereichs entlang der Axialrichtung des Kabels vorschiebbar ausgebildet ist.

2. Vorrichtung nach Anspruch 1, **dadurch gekennzeichnet, dass** die Druckversorgung dazu ausgebildet ist, den Druckstrom durch die Öffnung (39) am Vorderende des Körpers (33) bereitzustellen.

3. Vorrichtung nach Anspruch 1 oder 2, **dadurch gekennzeichnet, dass** die Druckversorgung eine pneumatische Druckquelle aufweist.

4. Vorrichtung nach einem der Ansprüche 1 bis 3, **dadurch gekennzeichnet, dass** sie eine Prozesssteuerung aufweist, die die Wirkung hat, den Linearantrieb derart zu steuern, dass der Linearantrieb derart gesteuert wird, dass der Spreizkörper (31) entlang der Mittelachse (32) des Hohlraums von einer Ausgangsstellung, in der das freie Kabelende (3) ausserhalb des rohrförmigen Hohlraums (35) angeordnet ist, in eine Zwischenstellung vorgeschoben wird, in der das freie Kabelende (3) in den rohrförmigen Hohlraum (35) eingeführt ist.

5. Vorrichtung nach einem der Ansprüche 1 bis 4, **dadurch gekennzeichnet, dass** die Kabelaufnahme (23) eine proximale Kabeleinspannung (24) aufweist, die dazu ausgebildet ist, einen proximalen Kabelteil in einer Stellung zu fixieren, in der der proximale Kabelteil im Wesentlichen konzentrisch zur Mittelachse (32) des Hohlraums angeordnet ist.

6. Vorrichtung nach den Ansprüchen 4 und 5, **dadurch gekennzeichnet, dass** die Prozesssteuerung die Wirkung hat, nachdem der Spreizkörper (31) von der Ausgangsstellung in die Zwischenstellung vorgeschoben wurde, die proximale Kabeleinspannung (24) von einem geschlossenen Zustand, in dem der proximale Kabelteil fixiert ist, in einen offenen Zustand umzuschalten, in dem der proximale Kabelteil freizugeben ist.

7. Vorrichtung nach Anspruch 6, **dadurch gekennzeichnet, dass** die Prozesssteuerung die Wirkung hat, nachdem die proximale Kabeleinspannung (24) in den geöffneten Zustand umgeschaltet wurde, den Linearantrieb derart zu steuern, dass der Spreizkörper (31) entlang der Mittelachse (32) des Hohlraums von der Zwischenstellung in eine Endstellung weiter vorgeschoben wird, in der das freie Kabelende (3) weiter in den rohrförmigen Hohlraum (35) hineinbewegt ist.

8. Vorrichtung nach einem der Ansprüche 5 bis 7, **dadurch gekennzeichnet, dass** die proximale Kabeleinspannung (24) mindestens zwei Klemmbacken (52, 53) aufweist, die dazu ausgebildet sind, den dazwischenliegenden proximalen Kabelteil zu fixieren.

9. Vorrichtung nach einem der Ansprüche 5 bis 8, **dadurch gekennzeichnet, dass** die Kabelaufnahme (23) eine distalen Kabeleinspannung (25) aufweist, die in einer grösseren Entfernung vom Vorderende (33) des Körpers als die proximale Kabeleinspannung (24) angeordnet ist.

10. Vorrichtung nach einem der Ansprüche 1 bis 9, **dadurch gekennzeichnet, dass** der ringförmige Oberflächenbereich (42) einen verjüngten Teil aufweist, der sich zum Vorderende (33) des Körpers hin verjüngt.

11. Vorrichtung nach Anspruch 10, **dadurch gekennzeichnet, dass** der verjüngte Teil einen Neigungswinkel zur Mittelachse (32) des Hohlraums zwischen 2 Grad und 30 Grad aufweist, vorzugsweise zwischen 5 Grad und 20 Grad.

12. Vorrichtung nach Anspruch 10 oder 11, **dadurch gekennzeichnet, dass** der verjüngte Teil einen im Wesentlichen konstanten Neigungswinkel zur Mittelachse (32) des Hohlraums aufweist.

13. Vorrichtung nach einem der Ansprüche 1 bis 12, **dadurch gekennzeichnet, dass** die Öffnung (39) einen Durchmesser aufweist, der im Wesentlichen einem Durchmesser des Kabelkernabschnitts (15) entspricht.

14. Verfahren zum Abspreizen mindestens einer Kabelschicht (16) eines abgeschirmten Kabels (1) von einem Kernabschnitt(15) des Kabels, wobei das Verfahren einen Einführschritt umfasst, bei dem der Kabelkernabschnitt (15) an einem freien Ende (3) des Kabels (1) in einen rohrförmigen Hohlraum (35) eines Spreizkörpers (31) eingeführt wird, sowie einen Vorschubschritt, bei dem der Kabelkernabschnitt (15) in dem rohrförmigen Hohlraum (35) entlang einer Mittelachse (32) des rohrförmigen Hohlraums vorgeschoben wird, wobei während des Vorschubschritts eine Verbindungsstelle (13) zwischen dem Kabelkernabschnitt (15) und der Kabelschicht (16) im Wesentlichen an einem Vorderende (33) des Spreizkörpers (31) anliegt und der Spreizkörper (31) um die Mittelachse (32) des Hohlraums gedreht wird,
**dadurch gekennzeichnet, dass**
am Vorderende (33) des Körpers ein Druckstrom bereitgestellt wird, so dass ein druckbeaufschlagter Bereich im Wesentlichen an der am Vorderende (33) des Körpers anliegenden Verbindungsstelle (13) erzeugt wird, wobei ein ringförmiger Oberflächenbereich (42) des Spreizkörpers (31) innerhalb des druckbeaufschlagten Verbindungsbereichs entlang der Axialrichtung des Kabels vorgeschoben wird.

15. Verfahren nach Anspruch 15, **dadurch gekennzeichnet, dass** das abgeschirmte Kabel (1) ein Koaxialkabel ist, das einen Innenleiter (5), umgeben von einer Isolierung (7), umgeben von einer Metallfolie (8), umgeben von einem Drahtgeflecht (9) aufweist.

## Revendications

1. Appareil d'évasement d'au moins une couche de câble (16) d'un câble blindé (1) à partir d'une section noyau (15) du câble, l'appareil comprenant un corps d'évasement (31) entourant une cavité tubulaire (35) ayant une ouverture (39) à une extrémité avant (33) du corps d'évasement (31) dans laquelle est insérable ladite section noyau (15) du câble à une extrémité libre (3) du câble (1) dans une direction axiale du câble, où l'appareil comprend un dispositif de fixation (23) du câble configuré pour positionner le câble (1) de telle manière que ladite extrémité libre (3) du câble est en regard de ladite extrémité avant (33) du corps, un actionneur linéaire configuré pour avancer le corps d'évasement (31) dans la direction d'un axe central (32) de la cavité tubulaire (35), de sorte que ladite extrémité libre (3) du câble est insérée dans la cavité tubulaire (35) et une jonction (13) entre ladite section noyau (15) du câble et ladite couche de câble (16) est substantiellement adjacente à ladite extrémité avant (33) du corps, et un actionneur rotatif (28) configuré pour mettre en rotation le corps d'évasement (31) autour dudit axe central (32) de la cavité, **caractérisé en ce que** l'appareil comprend en plus une alimentation en pression configurée pour alimenter un flux de pression à ladite extrémité avant (33) du corps, de sorte qu'une région pressurisée peut être produite substantiellement à l'endroit de ladite jonction (13) adjacente à ladite extrémité avant (33) du corps, et que le corps d'évasement (31) comprend une partie de surface (42) annulaire à ladite extrémité avant (33) du corps qui est adaptée à être avançable le long de la direction axiale du câble dans ladite région pressurisée de la jonction.

2. Appareil selon la revendication 1, **caractérisé en ce que** l'alimentation en pression est configurée pour alimenter ledit flux de pression par ladite ouverture (39) située à ladite extrémité avant (33) du corps.

3. Appareil selon la revendication 1 ou 2, **caractérisé en ce que** l'alimentation en pression comprend une source de pression pneumatique.

4. Appareil selon l'une des revendications 1 à 3, **caractérisé en ce qu'**il comprend un système de commande de processus opérationnel pour commander l'actionneur linéaire de manière à avancer le corps d'évasement (31) le long dudit axe central (32) de la cavité à partir d'une position initiale où ladite extrémité libre (3) du câble se trouve à l'extérieur de ladite cavité tubulaire (35), vers une position intermédiaire où ladite extrémité libre (3) du câble est insérée dans ladite cavité tubulaire (35).

5. Appareil selon l'une des revendications 1 à 4, **caractérisé en ce que** le dispositif de fixation (23) du câble comprend une retenue de câble proximale (24) configurée pour fixer une partie proximale du câble dans une position où ladite partie proximale du câble est substantiellement concentrique audit axe central (32) de la cavité.

6. Appareil selon les revendications 4 et 5, **caractérisé en ce que** le système de commande de processus est opérationnel, après que le corps d'évasement (31) a été avancé de ladite position initiale vers ladite position intermédiaire, pour faire changer la retenue de câble proximale (24) d'un état fermé où ladite partie proximale du câble est fixée, vers un état ouvert où ladite partie proximale du câble est libérée.

7. Appareil selon la revendication 6, **caractérisé en ce que** le système de commande de processus est opérationnel, après que la retenue de câble proximale (24) a été changée audit état ouvert, pour commander l'actionneur linéaire de manière à continuer d'avancer le corps d'évasement (31) le long dudit axe central (32) de la cavité de la position intermédiaire vers une position extrême où ladite extrémité libre (3) du câble est introduite plus loin dans ladite cavité tubulaire (35).

8. Appareil selon l'une des revendications 5 à 7, **caractérisé en ce que** la fixation de câble proximale (24) comprend au moins deux mâchoires de serrage (52, 53) configurées pour fixer entre elles ladite partie proximale du câble.

9. Appareil selon l'une des revendications 5 à 8, caractérisé en ce le dispositif de fixation (23) du câble comprend une retenue de câble distale (25) disposée à une plus grande distance de ladite extrémité avant (33) du corps que la retenue de câble proximale (24).

10. Appareil selon l'une des revendications 1 à 9, **caractérisé en ce que** ladite partie de surface annulaire (42) comprend une partie conique qui diminue vers ladite extrémité avant du corps (33).

11. Appareil selon la revendication 10, **caractérisé en ce que** ladite partie conique présente une pente d'inclinaison entre 2 degrés et 30 degrés, préférablement entre 5 degrés et 20 degrés, par rapport audit axe central (32) de la cavité.

12. Appareil selon la revendication 10 ou 11, **caractérisé en ce que** ladite partie conique présente une pente d'inclinaison substantiellement constante par rapport audit axe central (32) de la cavité.

13. Appareil selon l'une des revendications 1 à 12, **caractérisé en ce que** ladite ouverture (39) a un diamètre correspondant substantiellement au diamètre dudit section noyau (15) du câble.

14. Procédé d'évasement d'au moins une couche de câble (16) d'un câble blindé (1) à partir d'une section noyau (15) du câble, où le procédé comprend une étape d'insertion consistant à insérer ladite section noyau (15) du câble à une extrémité libre (3) du câble (1) dans une cavité tubulaire (35) d'un corps d'évasement (31) et une étape d'avancement consistant à avancer la section noyau (15) du câble dans ladite cavité tubulaire (35) le long d'un axe central (32) de la cavité tubulaire, où pendant ladite étape d'avancement, une jonction (13) entre ladite section noyau (15) du câble et ladite couche de câble (16) est substantiellement adjacente à une extrémité avant (33) du corps d'évasement (31) et le corps d'évasement (31) est mis en rotation autour dudit axe central (32) de la cavité, **caractérisé en ce qu'**un flux de pression est alimenté à ladite extrémité avant (33) du corps, de sorte qu'une région pressurisée est produite substantiellement à l'endroit de ladite jonction (13) adjacente à ladite extrémité avant (33) du corps, où une partie de surface (42) annulaire du corps d'évasement (31) est avancée le long de la direction axiale du câble dans ladite région pressurisée de la jonction.

15. Appareil selon la revendication 15, **caractérisé en ce que** le câble blindé (1) est un câble coaxial comprenant un conducteur central (5) entouré d'un isolant (7) entouré d'une feuille métallique (8) entourée d'une tresse métallique (9).
